(19) **Europäisches Patentamt**
European Patent Office
Office européen des brevets

(11) **EP 2 530 535 A1**

(12) **EUROPÄISCHE PATENTANMELDUNG**

(43) Veröffentlichungstag:
**05.12.2012 Patentblatt 2012/49**

(51) Int Cl.:
**G05B 9/00** (2006.01)     **G05B 19/05** (2006.01)
**H04L 12/40** (2006.01)

(21) Anmeldenummer: **11168423.9**

(22) Anmeldetag: **01.06.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Hubert, Johannes
90471 Nürnberg (DE)**
• **Witte, Karl-Hermann
90482 Nürnberg (DE)**

(54) **Verfahren zum Betrieb eines Automatisierungsgerätes**

(57)     Die Erfindung betrifft ein Verfahren zum Betrieb eines sicherheitsgerichteten und mit anderen Automatisierungsgeräten kommunikativ verbindbaren Automatisierungsgerätes (14, 18-22), wobei eine Datenübertragung vom oder zum Automatisierungsgerät (14, 18-22) mit einem Kommunikationstreiber (34) erfolgt, bei dem vom Automatisierungsgerät (14, 18-22) in Form von sicherheitsgerichteten Telegrammen (32) empfangene Daten (62) von einer Konvertierungseinheit (36) in ein für ein auf dem Automatisierungsgerät (14, 18-22) ablaufendes sicherheitsgerichtetes Anwenderprogramm (24) lesbares Zwischenformat (44) umgewandelt werden, und bei dem ein Datenstrukturtreiber (38) die Daten im Zwischenformat (44) in eine vom sicherheitsgerichteten Anwenderprogramm (24) vorgegebene Datenstruktur (46) konvertiert.

FIG 3

EP 2 530 535 A1

**Beschreibung**

Die Erfindung betrifft ein Verfahren zum Betrieb eines Automatisierungsgerätes, nämlich ein Verfahren zum Betrieb eines sicherheitsgerichteten und mit anderen Automatisierungsgeräten kommunikativ verbindbaren Automatisierungsgerätes.

Ein derartiges Verfahren ist aus der Verwendung der von der Anmelderin als sogenannte F-Geräte - wobei der Buchstabe F für fehlersicher steht und der Begriff fehlersicher synonym mit dem Begriff sicherheitsgerichtet verwendet wird - angebotenen Automatisierungsgeräte der unter der Marke SIMATIC vermarkteten Produktfamilie bekannt. Zur kommunikativen Verbindung mit anderen, insbesondere ebenfalls sicherheitsgerichteten Automatisierungsgeräten tauschen solche Automatisierungsgeräte sicherheitsgerichtete Telegramme aus, deren Verarbeitung durch einen Kommunikationstreiber erfolgt. Als Kommunikationstreiber kommt speziell bei den Geräten der Anmelderin ein sogenannter PROFIsafe Treiber in Betracht, also ein sicherheitsgerichteter Treiber für einen Datenaustausch gemäß dem unter der Marke PROFIBUS/PROFInet bekannten Standard und dort speziell nach dem unter der Bezeichnung PROFIsafe bekannten Protokoll.

Noch nicht ganz optimal bei derartigen Geräten sowie Verfahren zu deren Betrieb ist, dass für die Kommunikation einerseits ein sogenannter Multitreiber und andererseits ein oder mehrere Kanaltreiber erforderlich sind. Über den Multitreiber wird grundsätzlich eine Vielzahl von Kommunikationsverbindungen abgewickelt und dafür verfügt der Multitreiber über Kommunikationswissen, zum Beispiel wie und wo bestimmte Automatisierungsgeräte und wie und wo auf einem bestimmten Automatisierungsgerät ein bestimmter Empfänger, nämlich zum Beispiel ein zur Steuerung und/ oder Überwachung eines technischen Prozesses vorgesehenes Anwenderprogramm erreichbar sind. Der Multitreiber fungiert dabei als sogenannter Host-Treiber, welcher ausschließlich in der Lage ist, mit sicherheitsgerichteten Geräten zu kommunizieren. Der oder die Kanaltreiber verfügen über ein Wissen hinsichtlich der Datentypen der in sicherheitsgerichteten Telegrammen zu übermittelnden Nutzdaten. Dazu hat der Kanaltreiber Zugriff auf eine diesbezügliche Datenbasis. Damit ergibt sich aber gleichzeitig auch eine vergleichsweise starre Funktionalität eines Kanaltreibers, indem nämlich für jeden Datentyp eigene Kanaltreiber benötigt werden. Je nachdem, welche Art der Fehlerüberwachung und -erkennung der jeweilige Empfänger unterstützt (z.B. kanalgranulare Passivierung), wird auch noch ein auf den jeweiligen Empfänger und dessen Fehlerüberwachungs- und -erkennungfähigkeiten abgestimmter Kanaltreiber benötigt.

Weil die Bereitstellung und Einrichtung solcher Treiber aufwändig und im Einzelfall auch fehleranfällig ist, besteht eine Aufgabe der Erfindung darin, ein weiteres Verfahren zum Betrieb eines sicherheitsgerichteten und mit anderen Automatisierungsgeräten kommunikativ verbindbaren Automatisierungsgerätes anzugeben, das insbesondere die oben skizzierten Nachteile vermeidet oder zumindest deren Auswirkungen reduziert.

Diese Aufgabe wird erfindungsgemäß mit den Merkmalen des Anspruchs 1 gelöst. Dazu ist bei einem Verfahren zum Betrieb eines sicherheitsgerichteten und mit anderen Automatisierungsgeräten kommunikativ verbindbaren Automatisierungsgerätes, bei dem eine Datenübertragung vom oder zum Automatisierungsgerät mit einem Kommunikationstreiber erfolgt, vorgesehen, dass vom Automatisierungsgerät über eine sicherheitsgerichtete Kommunikationsverbindung, insbesondere in Form von sicherheitsgerichteten Telegrammen, empfangene Daten von einer Konvertierungseinheit in ein für ein auf dem Automatisierungsgerät ablaufendes sicherheitsgerichtetes Anwenderprogramm lesbares Zwischenformat umgewandelt werden und dass ein Datenstrukturtreiber die Daten im Zwischenformat in eine vom sicherheitsgerichteten Anwenderprogramm vorgegebene Datenstruktur konvertiert.

Einer der Vorteile der Erfindung besteht damit darin, dass die mit dem sicherheitsgerichteten Telegramm empfangenen Nutzdaten unmittelbar in dem vom empfangenden Automatisierungsgerät und dem dort ablaufenden sicherheitsgerichteten Anwenderprogramm erwarteten Datenformat bereitgestellt werden. Dies bezieht sich zum Beispiel auf die Darstellung ganzzahliger Daten (integer), die normalerweise in einem zwei Byte umfassenden Format vorliegen, wobei aber je nach Automatisierungsgerät eine unterschiedliche Reihenfolge von höher- und niederwertigem Byte vorgesehen sein kann. Auch eine insofern erforderliche Umsetzung übernimmt der Datenstrukturtreiber, wenn es darum geht, die Daten im vom Anwenderprogramm erwarteten Format bereitzustellen. Ähnliches gilt für denselben Datentyp (integer), der auf einigen Geräten mit zwei Byte und auf anderen Geräten mit vier Byte dargestellt wird. Für andere Datentypen lassen sich entsprechende, analoge Beispiele finden. Dafür wird zum Beispiel auf eine Datenbasis, bei einer Kommunikation nach dem Profibus/Profinet Standard auf eine Process Data Unit (PDU) oder einen Datenteil eines Profibus-Telegramms, zurückgegriffen, der aufgrund einer entsprechenden Projektierung sämtlicher verwendeter Daten und der in diesem Zusammenhang erfolgenden Festlegung der jeweiligen Datentypen das vom Anwenderprogramm erwartete Datenformat entnehmbar ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass vom Automatisierungsgerät zu versendende Daten durch den Datenstrukturtreiber auf Basis der vom oder im sicherheitsgerichteten Anwenderprogramm für die Daten vorgegebenen Datenstruktur in das Zwischenformat konvertiert werden und dass die Konvertierungseinheit auf Basis des Zwischenformats Daten zur Erzeugung eines sicherheitsgerichteten Telegramms zur Übermittlung an den jeweiligen Empfänger generiert. Indem die zu versendenden Daten durch den Datenstrukturtreiber in das Zwischenformat konvertiert werden, kann eine geeignete Modifikation oder Ergänzung der zu versendenden Daten erfolgen, so dass eine evtl. Veränderung der versandten Daten bei deren Empfang durch ein sicherheitsgerichtetes Automatisierungsgerät erkennbar wird.

Wenn das fehlersichere Anwenderprogramm beim Erhalt eines sicherheitsgerichteten Telegramms eine Datenstruktur der erhaltenen Daten mit einer vom empfangenden Anwenderprogramm vorgegebenen, erwarteten Datenstruktur vergleicht, kann sichergestellt werden, dass das Anwenderprogramm die erhaltenen Daten nur dann als fehlerfrei übertragen weiter verarbeitet, wenn ein solcher Vergleich erfolgreich gewesen ist. Im Fehlerfall kann eine Ausnahmebehandlung der empfangenen Daten durch das fehlersichere Anwenderprogramm erfolgen. Diese Ausnahmebehandlung kann auch darin bestehen, dass das sicherheitsgerichtete Telegramm abgewiesen wird.

In einer Ausführungsform des Verfahrens ist vorgesehen, dass das fehlersichere Anwenderprogramm zum Vergleichen der Datenstruktur der empfangenen Daten und der erwarteten Datenstruktur jeweils diesbezügliche Kennwerte vergleicht. Der Vergleich kann dann schnell und unkompliziert erfolgen, indem die Überprüfung der Datenstruktur oder Datenstrukturen der kompletten, von dem jeweiligen Telegramm umfassten Nutzdaten auf den Vergleich zweier oder zumindest weniger Kennwerte reduziert wird, nämlich zumindest eines ersten von Telegramm umfassten oder anhand des Telegramms gebildeten Kennwerts und zumindest eines zweiten, anhand der vom sicherheitsgerichteten Anwenderprogramm vorgegebene Datenstruktur oder Datenstrukturen gebildeten Kennwerts.

Wenn der Datenstrukturtreiber durch einen Treibergenerator automatisch generiert wird, wobei ein erwarteter Kennwert im empfängerseitigen Anwenderprogramm hinterlegt wird und wobei das empfängerseitige Anwenderprogramm für ein empfangenes sicherheitsgerichtetes Telegramm eine Ausnahmebehandlung auslöst, wenn die Kennwerte anhand des sicherheitsgerichteten Telegramms nicht den erwarteten Kennwerten entsprechen, ist eine für einen Projektierungsingenieur, der für einen zu automatisierenden technischen Prozess eine Automatisierungslösung und in diesem Zusammenhang ein oder mehrere Anwenderprogramm erstellt, besonders hilfreiche Konstellation erreicht. Der Projektierungsingenieur braucht sich einerseits nicht um die Erstellung des oder der Datenstrukturtreiber zu kümmern, wenn diese von einer Entwicklungsumgebung oder dergleichen, auf der Basis einzelner Angaben hinsichtlich der über die jeweilige Kommunikationsverbindung zu übermittelnden Nutzdaten automatisch erstellt wird. Der Projektierungsingenieur braucht sich andererseits auch nicht um die korrekte Ermittlung von Kennwerten zur späteren Aufdeckung evtl. Fehler bei der Übermittlung der Nutzdaten zu kümmern, wenn auch der oder jeder Kennwert automatisch bei der Treibergenerierung ermittelt und auf Seiten des Empfängers der jeweiligen Kommunikationsbeziehung, also insbesondere im empfängerseitigen Anwenderprogramm , automatisch hinterlegt wird. Des Weiteren ist der Projektierungsingenieur bei dieser Ausführungsform des Verfahrens auch entlastet, wenn es darum geht, eine Bildungsregel für die Ermittlung jeweils eines Kennwertes auszuwählen und eine evtl. Mehrzahl von Bildungsregeln über die Automatisierungslösung konsistent zu halten. Die Bildungsregel ist im Treibergenerator hinterlegt und wird bei der Generierung des jeweiligen Datenstrukturtreibers auch in diesem hinterlegt. Bei der Verarbeitung der Daten eines sicherheitsgerichteten Telegramms kann der Datenstrukturtreiber über die erhaltenen Nutzdaten mit derselben Bildungsregel einen Kennwert ermitteln, die auch für die Ermittlung des erwarteten Kennwerts verwendet wurde, wobei der erwartete Kennwert bereits zur Compile-Zeit oder zum Compile-Zeitpunkt im empfängerseitigen Anwenderprogramm hinterlegt wird. Der Compile-Zeit oder Compile-Zeitpunkt bezieht sich dabei auf die Erstellung des Anwenderprogramms und wird zur Unterscheidung von Laufzeit des Anwenderprogramms, wenn also das Anwenderprogramm bereits ausgeführt wird, verwendet.

Die oben genannte Aufgabe wird auch mit einem Automatisierungsgerät zur Steuerung und/oder Überwachung eines technischen Prozesses gelöst, das nach dem Verfahren wie hier und im Folgenden beschrieben arbeitet und dazu Mittel zur Durchführung des Verfahrens umfasst. Die oben genannte Aufgabe wird ebenfalls mit einem speziellen Automatisierungsgerät, nämlich zum Beispiel einem sogenannten Programmiergerät zur Erstellung von Automatisierungslösungen gelöst, das nach dem Verfahren wie hier und im Folgenden beschrieben arbeitet und dazu ebenfalls Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Automatisierungsgerät mit einer Verarbeitungseinheit nach Art eines Mikroprozessors oder dergleichen, in dessen Speicher als Mittel zur Durchführung des Verfahrens und seiner Ausgestaltungen ein solches Computerprogramm geladen oder ladbar ist und das durch die Verarbeitungseinheit ausführbar ist um alle Schritte des Verfahrens oder seiner Ausgestaltungen auszuführen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1    ein Automatisierungssystem mit einer Mehrzahl kommu-nikativ verbundener Automatisierungsgeräte,

FIG 2    Details der von einem Automatisierungsgerät nach dem hier vorgestellten Ansatz umfassten Funktionseinheiten, insbesondere einen Datenstrukturtreiber als eine derartige Funktioneinheit,

FIG 3    die Verhältnisse aus FIG 2 im Zusammenhang mit einem Treibergenerator zur automatischen Generierung eines Datenstrukturtreibers,

FIG 4    eine schematisch vereinfachte Darstellung zur Ver-deutlichung einer Möglichkeit zur Ermittlung von Kennwerten anhand der Datentypen übermittelter der zu übermittelnder Daten,

FIG 5    eine Darstellung eines Ablaufs einer Übermittlung ei-nes sicherheitsgerichteten Telegramms unter Verwendung eines Datenstrukturtreibers und

FIG 6    eine schematisch vereinfachte Darstellung des Ablaufs einer automatischen Generierung eines Datenstrukturtreibers anhand eines Flussdiagramms.

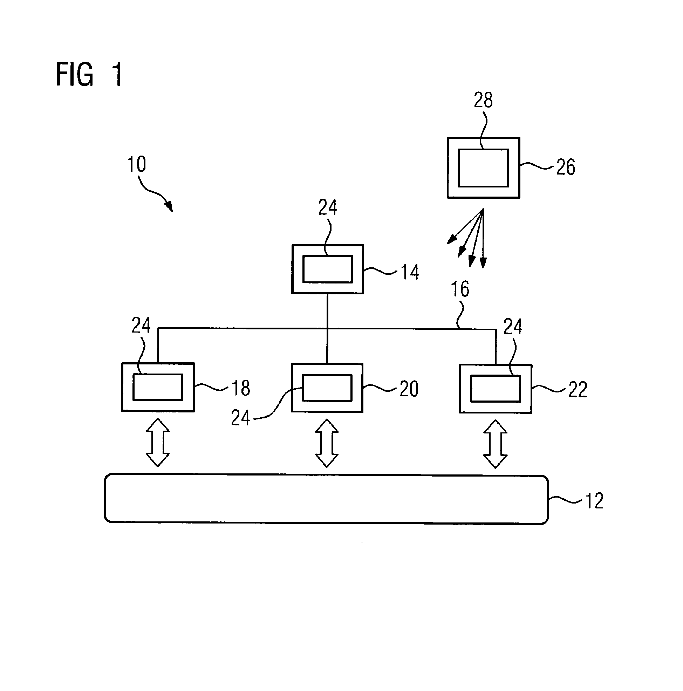

FIG 1 zeigt schematisch vereinfacht ein Automatisierungssystem 10, das in an sich bekannter Art und Weise zur Steuerung und/oder Überwachung eines nicht näher dargestellten technischen Prozesses 12 vorgesehen ist. Das Automatisierungssystem 10 umfasst zumindest ein Automatisierungsgerät 14. Bei einem Automatisierungssystem 10 mit genau einem Automatisierungsgerät 14 sind die Begriffe Automatisierungssystem 10 und Automatisierungsgerät 14 synonym. In der dargestellten Situation umfasst das Automatisierungssystem 10 eine Mehrzahl von zum Beispiel über einen Bus 16 kommunikativ verbundenen Automatisierungsgeräten 14, 18, 20, 22. Zur Steuerung und/oder Überwachung des jeweiligen technischen Prozesses 12 führt das Automatisierungssystem 10, nämlich durch das oder jedes davon umfasste Automatisierungsgerät 14, 18-22, in an sich bekannter Art als Anwenderprogramme 24 ein oder mehrere Steuerungsprogramme aus. Die Gesamtheit der Anwenderprogramme 24 und eine Konfiguration und/oder Parametrierung der einzelnen Automatisierungsgeräte 14, 18-22, zum Beispiel Antriebe oder dergleichen, wird hier und im Folgenden als Automatisierungslösung bezeichnet. Bei zumindest einem der Automatisierungsgeräte 14, 18-22 handelt es sich um ein sicherheitsgerichtetes Automatisierungsgerät und bei dessen Anwenderprogramm 24 handelt es sich entsprechend um ein fehlersicheres Anwenderprogramm 24 oder ein F-Anwenderprogramm (F-AWP). Die Automatisierungslösung und damit jedes Anwenderprogramm 24 wird zum Beispiel mit Hilfe einer in Software implementierten und auf einem Programmiergerät 26 ablaufenden Entwicklungsumgebung 28 erstellt und zum Beispiel im Rahmen einer Inbetriebnahme auf das oder jedes jeweilige Automatisierungsgerät 14,18-22 übertragen, wobei letzteres zeichnerisch durch die vom Programmiergerät 26 ausgehenden Pfeile angedeutet sein soll.

Grundsätzlich kann eine sicherheitsgerichtete Kommunikation zwischen zwei fehlersicheren Anwenderprogrammen 24, die auf ein und demselben sicherheitsgerichteten Automatisierungsgerät ausgeführt werden, stattfinden. Eine übliche Situation besteht allerdings darin, dass eine sicherheitsgerichtete Kommunikation zwischen einem auf einem ersten sicherheitsgerichteten Automatisierungsgerät 18 ausgeführten Anwenderprogramm 24 und einem oder mehreren auf anderen sicherheitsgerichteten Automatisierungsgeräten 14, 20, 22 ausgeführten fehlersicheren Anwenderprogrammen 24 erfolgt. Von diesem Szenario wird exemplarisch im Folgenden ausgegangen.

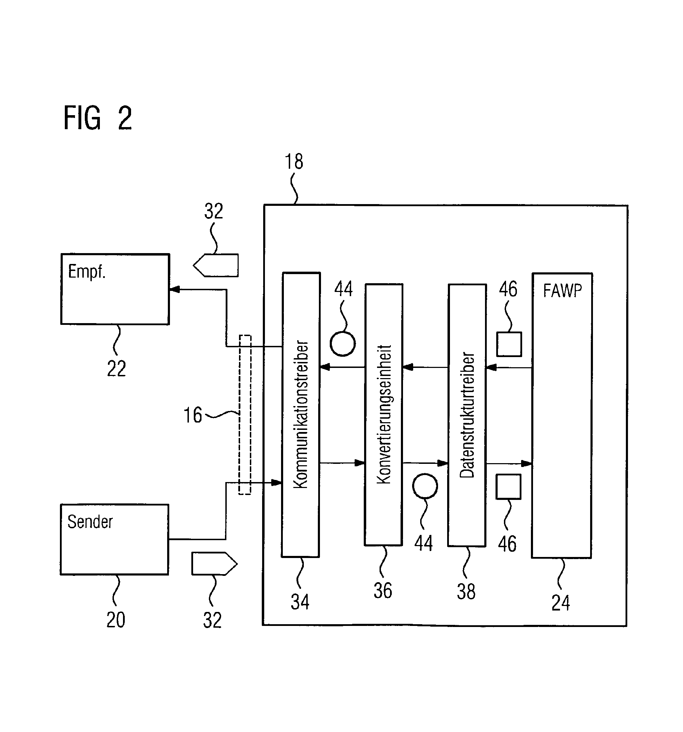

FIG 2 zeigt dazu auf Basis der vereinfachten Darstellung in FIG 1 eine typische Situation beim Betrieb eines sicherheitsgerichteten und mit anderen Automatisierungsgeräten 20, 22 über einen Bus 16 oder dergleichen kommunikativ verbundenen Automatisierungsgerätes 18.

Für eines der Automatisierungsgeräte 18, für das beispielhaft angenommen wurde, dass dieses von einem in einer Kommunikationsbeziehung als Sender fungierenden Automatisierungsgerät 20 ein sicherheitsgerichtetes Telegramm 32 empfängt, ist dessen interner Aufbau, soweit die fehlersichere Kommunikation betroffen ist, dargestellt. Danach umfasst das Automatisierungsgerät 18 und ebenso jedes andere nach dem hier beschriebenen Verfahren und/oder einzelner Ausgestaltungen arbeitende Automatisierungsgerät 14, 20, 22 einen Kommunikationstreiber 34, eine Konvertierungseinheit 36, einen Datenstrukturtreiber 38 und ein fehlersicheres Anwenderprogramm 24. Die Funktionalität des Kommunikationstreibers 34, der Konvertierungseinheit 36 und des Datenstrukturtreibers 38 sind in Software implementiert, so dass diese zusammen mit dem fehlersicheren Anwenderprogramm 24 in einen nicht separat dargestellten Speicher des Automatisierungsgeräts 18 geladen oder ladbar sind.

Eine Datenübertragung vom oder zum Automatisierungsgerät 18 erfolgt mit dem Kommunikationstreiber 34 und beim Erhalt eines fehlersicheren Telegramms 32 von einem Sender 20 übernimmt der Kommunikationstreiber 34 dessen Vorverarbeitung und insbesondere die Bereitstellung der von dem Telegramm 32 umfassten Nutzdaten. Bei dem Kommunikationstreiber 34 handelt es zum Beispiel um einen PROFIsafe Treiber. Die Konvertierungseinheit 36 übernimmt sodann eine Konvertierung des Inhalts des fehlersicheren Telegramms 32 in ein für das auf dem Automatisierungsgerät 18 ablaufende sicherheitsgerichtete Anwenderprogramm 24 lesbares Zwischenformat 44. Bei der Konvertierungseinheit 36 handelt es zum Beispiel um ein sogenanntes PROFIsafe Interface. Bei dem Zwischenformat handelt es sich zum Beispiel um ein Feld mit Feldelementen in einem einheitlichen Datenformat, zum Beispiel dem Datenformat Byte. Das Datenfeld ist dann eine Bytefolge. Schließlich übernimmt der Datenstrukturtreiber 38 eine Konvertierung der Daten im Zwischenformat 44 in eine vom sicherheitsgerichteten Anwenderprogramm 24 vorgegebene Datenstruktur 46.

Beim umgekehrten Szenario, wenn also das Automatisierungsgerät 18 als Sender fungiert und ein sicherheitsgerichtetes Telegramm 32 an ein anderes Automatisierungsgerät 22 als Empfänger zu übertragen ist, ergibt sich eine korrespondierende Situation ausgehend vom sicherheitsgerichteten Anwenderprogramm 24. Vom Automatisierungsgerät 18 und dessen Anwenderprogramm 24 zu versendende Daten werden zunächst durch den Datenstrukturtreiber 38 auf Basis der vom sicherheitsgerichteten Anwenderprogramm 24 für die Daten vorgegebenen Datenstruktur 46 vorbereitet und sodann durch die Konvertierungseinheit in das Zwischenformat 44 zur Erzeugung eines sicherheitsgerichteten Telegramms 32 zur Übermittlung an den jeweiligen Empfänger 22 umgewandelt.

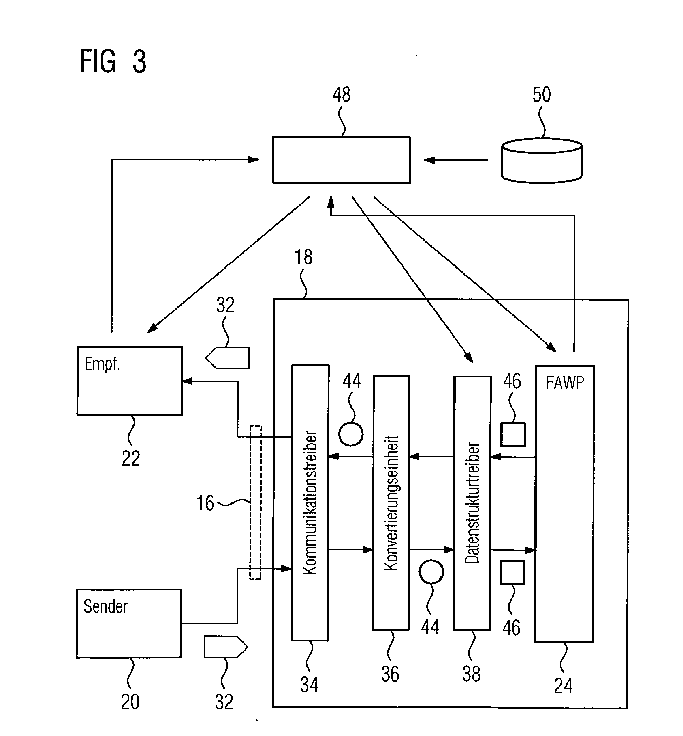

Der Datenstrukturtreiber 38 wird programmiert oder in einer besonderen Ausführungsform des Verfahrens automatisch generiert. FIG 3 zeigt dazu die Situation gemäß FIG 2 und zusätzlich einen zum automatischen Erzeugen eines oder mehrerer Datenstrukturtreiber 38 vorgesehenen Treibergenerator 48. Der Treibergenerator 48 greift zum Erzeugen eines Datenstrukturtreibers 38 auf eine Datenbasis 50 zu, nämlich zum Beispiel eine Process Data Unit bei einer Kommunikation nach dem Profibus/Profinet Standard, die Informationen über alle in der jeweiligen Automatisierungslösung projektierten Daten und deren Datentypen und darüber hinaus Programmkonstrukte für die Erstellung von Treibern für Datenstrukturen und deren Konvertierung umfasst. Des Weiteren liest der Treibergenerator 48 das sicherheitsgerichtete Anwenderprogramm 24 und eine Projektierung des jeweiligen Kommunikationspartners, also zum Beispiel des in einer Kommunikationsbeziehung als Empfänger fungierenden Automatisierungsgeräts 22. Auf dieser Basis werden die von den jeweiligen Kommunikationspartnern vorgesehenen Datenstrukturen 46 bestimmt.

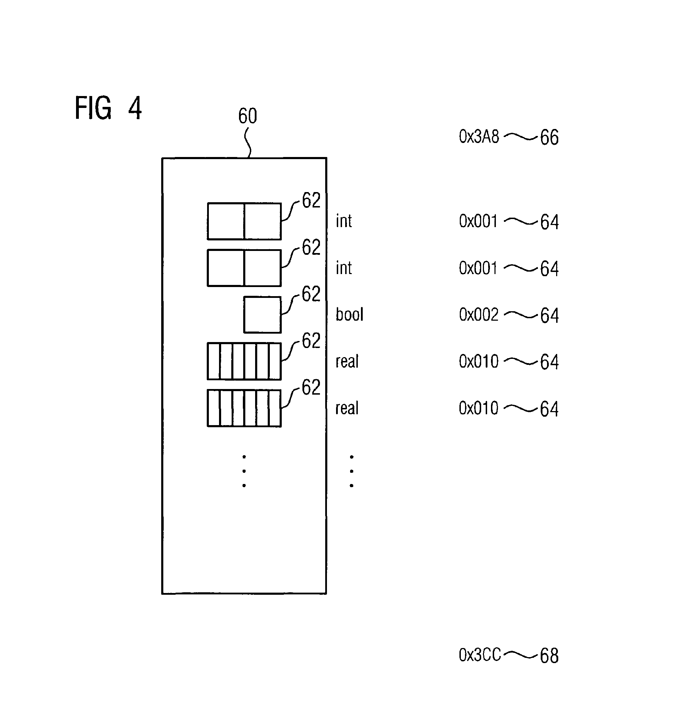

Der automatisch generierte Datenstrukturtreiber 38 ermittelt bei der Konvertierung der Daten im Zwischenformat 44 in die vom sicherheitsgerichteten Anwenderprogramm 24 vorgegebene Datenstruktur 46 einen die Datenstruktur repräsentierenden Kennwert. Dazu zeigt FIG 4 ein Datenfeld 60 im Zwischenformat 44 (FIG 3) mit einer Mehrzahl von davon umfassten Daten 62. Für jedes Datum 62 ist ein Datentyp, also zum Beispiel "bool", "int", "real", usw., vorgesehen. Bei der Darstellung in FIG 4 wurde davon ausgegangen, dass die Daten 62 im Datenfeld 60 als Bytefolge zur Verfügung gestellt werden, so dass die Darstellung auch zeigt, dass bei der hier angenommenen Kodierung zu einem Datum 62 im Format "int" (integer) zwei Byte (dargestellt durch zwei Kästchen) der Bytefolge gehören. Entsprechend sind für ein Datum im Format "bool" ein Kästchen und ein Datum im Format "real" jeweils sechs Kästchen dargestellt.

Zur einfachen Bildung eines Kennwertes kann vorgesehen sein, dass jedem Datentyp eine den Datentyp kodierende numerische oder sonst geeignete Information 64 zugeordnet ist. Aus diesen Informationen hinsichtlich der von dem Datenfeld 60 umfassten Daten 62, sowie einer Prüfziffer 66 vom Kommunikationstreiber 34 und/oder der Konvertierungseinheit 36 wird - zum Beispiel durch Addition - der Kennwert 68 für das jeweilige Datenfeld 60 ermittelt. Die Prüfziffer kann dabei auch den Empfänger kodieren, zum Beispiel indem dessen Adresse oder ein ähnliches, kennzeichnendes Datum in der Prüfziffer enthalten ist oder bei der Bildung der Prüfziffer berücksichtigt wurde.

Der Kennwert 68 wird bei der automatischen Erstellung des Datenstrukturtreibers 38 für eine bestimmte Kommunikationsbeziehung zumindest anhand der Datentypen der von der Kommunikationsbeziehung umfassten Daten einmal ermittelt. Dieser zum Compile-Zeitpunkt ermittelte Kennwert 68 fungiert beim Betrieb des jeweiligen Automatisierungsgerätes als erwarteter Kennwert. Wie in FIG 4 dargestellt, kann zur Ermittlung des erwarteten Kennwerts auch eine Prüfziffer 66 berücksichtigt werden. Diese Prüfziffer kodiert zum Beispiel das in der jeweiligen Kommunikationsbeziehung als Sender 20 fungierende Automatisierungsgerät 14, 18-22.

Anstelle hinterlegter Information 64 zur Kennzeichnung des jeweiligen Datentyps eines Datums 62 kommt grundsätzlich auch jede mögliche Form einer mathematischen Ermittlung einer solchen Information in Betracht. Des Weiteren kommt abweichend von der oben erwähnten Addition der zu jeweils einem Datentyp eines Datums 62 gehörigen Information auch jede andere denkbare Ermittlung eines Kennwerts 68 in Betracht. Exemplarisch wird hier nur eine weitere Möglichkeit zur Ermittlung des Kennwerts 68 wie folgt angegeben:

```
Kennwert 68 = Prüfziffer 66 + ( erster Gewichtsfaktor x In-
formation 64 zum Datentyp des ersten Datums 62) + ( zweiter
Gewichtsfaktor x Information 64 zum Datentyp des zweiten Da-
tums 62) + usw.
```

Der erwartete Kennwert kann zum Beispiel im empfängerseitigen Anwenderprogramm 24 hinterlegt werden und zwar ebenfalls bereits zum Compile-Zeitpunkt. Dann wird bei der Generierung des automatisch erstellen Datenstrukturtreibers 38 dort ein Programmcode angelegt, mit dem nach der gleichen Berechnungsgrundlage oder dem gleichen Bildungsschema die bzw. das bei der Ermittlung des hinterlegten erwarteten Kennwerts verwendet wurde, zur Laufzeit anhand der Datentypen der tatsächlich übermittelten Daten ein (aktueller) Kennwert ermittelt werden kann.

Grundsätzlich kann der erwartete Kennwert zusammen mit der bzw. dem für dessen Ermittlung verwendeten Berechnungsgrundlage/Bildungsschema zum Compile-Zeitpunkt auch im empfängerseitigen Datenstrukturtreibers 38 hinterlegt werden.

Bei der Bearbeitung eines sicherheitsgerichteten Telegramms 32, also zur Laufzeit, bildet der senderseitige Datenstrukturtreiber 38 jedenfalls anhand der Datentypen der tatsächlich übertragenen Daten sowie - im dargestellten Beispiel - anhand der Prüfziffer 66 den jeweiligen Kennwert 68. Wenn der erwartete Kennwert zum Compile-Zeitpunkt im empfängerseitigen Datenstrukturtreiber 38 hinterlegt wurde, kann der empfängerseitige Datenstrukturtreiber 38 unmittelbar einen Vergleich von aktuellem Kennwert und erwartetem Kennwert durchführen und bei einer evtl. Abweichung vorgegebene Maßnahmen einleiten, also zum Beispiel eine entsprechende Information an das empfängerseitige Anwenderprogramm 24 absetzen. Wenn der erwartete Kennwert zum Compile-Zeitpunkt im empfängerseitigen Anwenderprogramm 24 hinterlegt wurde, erhält dieses zusammen mit den in die vorgegebene Datenstruktur 46 umgewandelten Daten auch den jeweils aktuellen Kennwert 68. Das empfängerseitige Anwenderprogramm 24 kann dann den aktuellen Kennwert 68 mit dem hinterlegten Kennwert vergleichen und bei einer etwaigen Abweichung ebenfalls entsprechende Maßnahmen einleiten, nämlich zum Beispiel eine Ausnahmebehandlung.

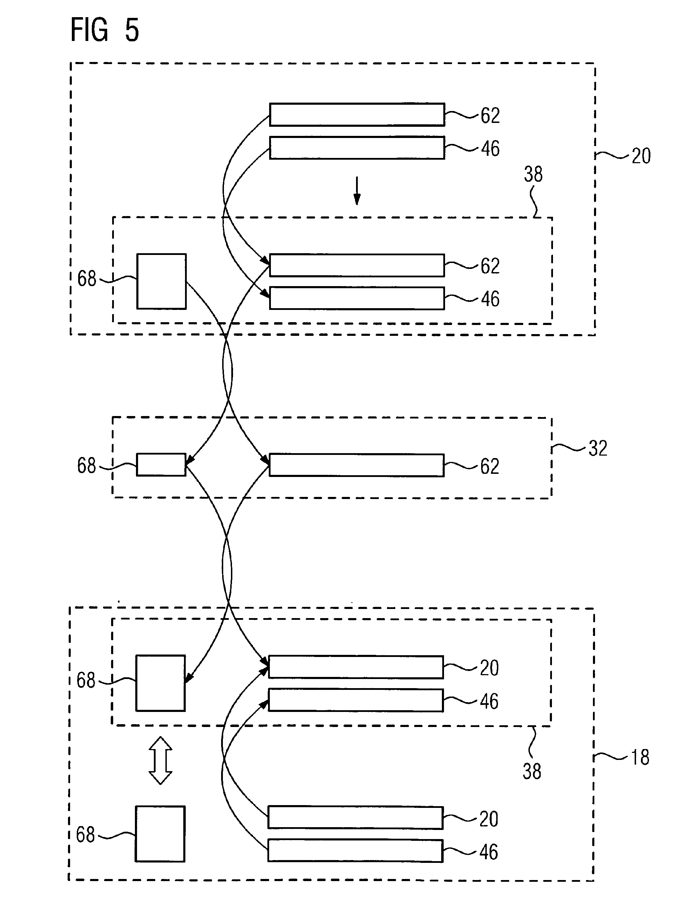

Nachfolgend wird der Ablauf der Übertragung der Daten anhand der schematisch vereinfachten Darstellung in FIG 5 nochmals erläutert. Danach werden bei einem Automatisierungsgerät 14, 18-22 mit einem Sendewunsch (Sender 20) dort zu versendende Daten 62 und die jeweils zugehörigen Datenformate 46 zusammengestellt. Der senderseitige Datenstrukturtreiber 38 bildet zumindest anhand der Datenformate 46 und der bei dessen automatischer Generierung hinterlegen Bildungsregel einen Kennwert 68 zu den Datenformaten der übermittelten Daten 62. Ein schließlich generiertes (Konvertierungseinheit 36, Kommunikationstreiber 34) sicherheitsgerichtetes Telegramm 32 umfasst die Daten 62 und den ermittelten Kennwert 68. Auf Empfängerseite 18 ist der dortige Datenstrukturtreiber 38 darüber orientiert, in welchem Datenformat 46 das dortige Anwenderprogramm 24 die übermittelten Daten 62 erwartet. Die zunächst noch in dem Zwischenformat 44 (FIG 3; in FIG 5 nicht separat dargestellt) vorliegenden Daten werden auf Basis des erwarten Datenformats 46 durch den Datenstrukturtreiber 38 in dieses umgewandelt. Der mit übermittelte Kennwert 68 bezieht sich allerdings auf das Datenformat 46, in dem die Daten vom Sender 20 übertragen wurden. Es könnte also die Situation vorkommen, dass die übertragenen Daten auf Empfängerseite in ein Datenformat 46 konvertiert werden, das von dem ursprünglichen Datenformat 46 abweicht. Dafür vergleicht der jeweilige Empfänger den erhaltenen (aktuellen) Kennwert 68 mit einem zum Compile-Zeitpunkt in dessen Anwenderprogramm 32 hinterlegten, erwarteten Kennwert 68 (in der Darstellung durch den Blockpfeil angedeutet). Im Falle etwaiger Abweichungen kann eine Ausnahmebehandlung ausgelöst werden.

Wenn bei der Bildung des Kennwerts 68, also sowohl bei der Bildung des zum Compile-Zeitpunkt im Empfänger zu hinterlegenden Kennwerts wie auch bei der zur Laufzeit erfolgenden Bildung des Kennwerst 68 durch den Datenstrukturtreiber 38, eine Prüfziffer 66 berücksichtigt wird und diese Prüfziffer den jeweiligen Sender 20 kodiert, kann nicht nur ein evtl. Fehler hinsichtlich der Datenformate sondern auch der Erhalt eines Telegramms 32 von einem Sender 20 in einer nicht projektierten Kommunikationsbeziehung erkannt werden.

Eine alternative oder zusätzliche Ausführungsform besteht darin, dass beim Sender 20 zum Compile-Zeitpunkt ein nach einer Bildungsregel (vgl. FIG. 4) ermittelter Kennwert 68 für eine bestimmte Kommunikationsbeziehung hinterlegt wird. Ebenso wird im senderseitigen Datenstrukturtreiber 38 zum Compile-Zeitpunkt die jeweilige Bildungsregel hinterlegt. Mit dieser ermittelt der senderseitige Datenstrukturtreiber 38 anhand der zur Laufzeit tatsächlich übertragenen Daten 62 den jeweiligen aktuellen Kennwert 68. Der senderseitige Datenstrukturtreiber 38 kann damit anhand des ermittelten aktuellen Kennwerts 38 und des vom Sender 20 erhaltenen, festen Kennwerts unmittelbar ermitteln, ob die zu übertragenden Daten 62 zu der ursprünglich projektierten Kommunikationsbeziehung passen. Bei evtl. Abweichungen der beiden Kennwerte 68 kann der senderseitige Datenstrukturtreiber 38 unmittelbar eine Ausnahmebehandlung veranlassen, zum Beispiel die Erzeugung eines Telegramms 32 auf Basis der Daten 62 unterdrücken, eine Erzeugung eines Telegramms 32 zulassen aber eine Kennzeichnung des Telegramms 32 als mit der Kommunikationsbeziehung inkonsistent veranlassen, die Erzeugung eines Telegramms 32 veranlassen, das nur einen Hinweis auf die Inkonsistenz der Daten aber nicht die Daten 62 selbst umfasst, usw.

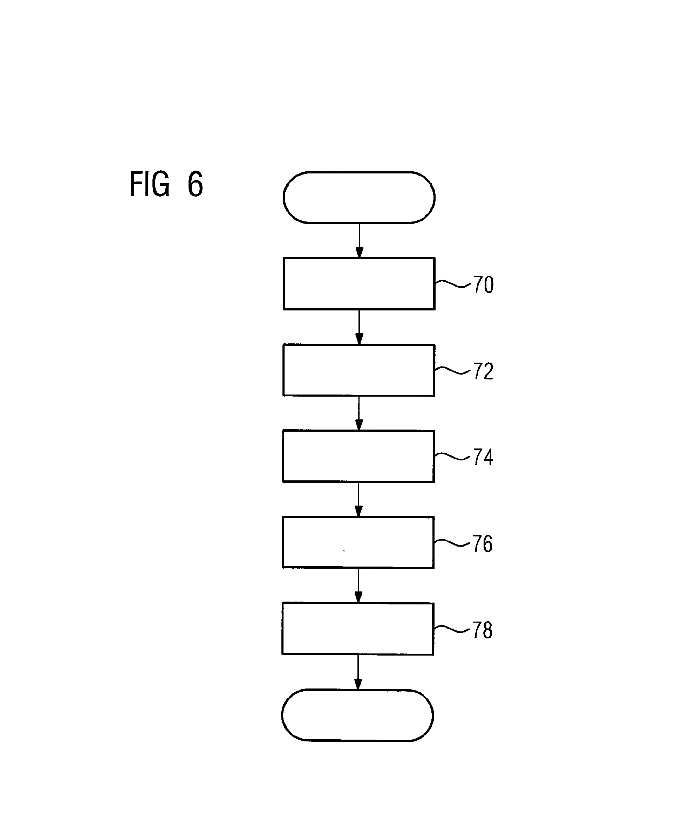

Abschließend wird das grundsätzliche Verfahren beim automatischen Generieren eines Datenstrukturtreibers 38 durch einen Treibergenerator 48 anhand des schematisch vereinfachten Flussdiagramms in FIG 6 erläutert.

In einem ersten Funktionsblock 70 wird für eine ausgewählte Kommunikationsbeziehung ermittelt, welche Kommunikationsteilnehmer und welche Daten betroffen sind, also einerseits zur Übermittlung an einen jeweiligen Empfänger und andererseits zum dortigen Empfang vorgesehen sind. Indem die betroffenen Daten festgelegt werden, kann für die Kommunikationsbeziehung ein Datenfeld 60 (FIG 4) mit Informationen zu allen relevanten Daten 62 angelegt werden.

In einem zweiten Funktionsblock 72 wird ein Programmcode für den Datenstrukturtreiber 38 erzeugt, mit dem Daten im Zwischenformat 44, wie es im Betrieb von der Konvertierungseinheit 36 (FIG 3) generiert wird, in das vom empfängerseitigen sicherheitsgerichteten Anwenderprogramm 24 vorgegebene Format, also die insoweit vorgegebene Datenstruktur 46, konvertierbar sind. Dazu greift der Treibergenerator 48 auf die Datenbasis 50 zu, die Codefragmente für solche Zwecke umfasst.

In einem dritten Funktionsblock 74 wird anhand der für die Kommunikationsbeziehung ausgewählten Daten 62 ein Kennwert 68 ermittelt, wie oben exemplarisch anhand der Darstellung in FIG 4 beschrieben. Der Kennwert 68 wird zum Compile-Zeitpunkt im empfängerseitigen Anwenderprogramm 24 (oder alternativ im empfängerseitigen Datenstrukturtreiber 38) abgelegt.

In einem vierten Funktionsblock 76 wird zum Compile-Zeitpunkt im senderseitigen Datenstrukturtreiber 38 ein Programmcode zur Bildung jeweils eines aktuellen Kennwerts 68 hinterlegt. Der hinterlegte Programmcode entspricht dem Programmcode, den der Treibergenerator 48 bei der Ermittlung des Kennwerts für das empfängerseitige Anwenderprogramms 24 verwendet hat oder basiert zumindest auf der gleichen Formel/Bildungsregel.

Die Reihenfolge des zweiten, dritten und vierten Funktionsblocks 72, 74, 76 bei der Generierung des Datenstrukturtreibers 38 ist grundsätzlich variabel.

In einem fünften Funktionsblock 78 wird der ermittelte Kennwert 68 als erwarteter Kennwert im empfängerseitigen Anwenderprogramm 24 hinterlegt und werden der senderseitige Datenstrukturtreiber 38 und der empfängerseitige Datenstruktur 38, letzter mit dem Programmcode zur Ermittlung eines jeweils aktuellen Kennwerts, beim Sender 20 und beim Empfänger platziert.

Der Treibergenerator 48 wird auf einem speziellen Automatisierungsgerät 14, 18-22, zum Beispiel einem sogenannten Programmiergerät 26, ausgeführt, das mit seiner Verarbeitungseinheit eine in Software implementierte Entwicklungsumgebung 28 zum Erstellen und Ändern von Automatisierungslösungen ausführt. Der Treibergenerator 48 ist dabei zum Beispiel als Teilfunktionalität der Entwicklungsumgebung 28 realisiert.

Der Vorteil der Erfindung und ggf. der hier beschriebenen, besonderen Ausführungsformen besteht vor allem auch darin, dass die Grundlagen für die Konvertierung und für Ausführungsformen bei denen dies vorgesehen ist, auch die Grundlagen für die Überprüfung bereits zum Compile-Zeitpunkt angelegt werden und dass zur Laufzeit keine Maßnahmen des Programmierers/Projektierungsingenieurs in dieser Hinsicht mehr erforderlich sind. Insoweit dabei die automatische Generierung des Datenstrukturtreibers 38 betroffen ist, umfasst die Erfindung als Computerprogramm auch eine Entwicklungsumgebung 28, die eine solche automatische Generierung übernimmt und/oder eine Entwicklungsumgebung 28, die einen automatisch ermittelten Kennwert 68 im empfängerseitigen Anwenderprogramm 24 oder im empfängerseitigen Datenstrukturtreiber 38 platziert.

**Patentansprüche**

1. Verfahren zum Betrieb eines sicherheitsgerichteten und mit anderen Automatisierungsgeräten kommunikativ verbindbaren Automatisierungsgerätes (14, 18-22),
   wobei eine Datenübertragung vom oder zum Automatisierungsgerät (14, 18-22) mit einem Kommunikationstreiber (34) erfolgt,
   wobei vom Automatisierungsgerät (14, 18-22) über eine sicherheitsgerichtete Kommunikationsverbindung, insbesondere in Form von sicherheitsgerichteten Telegrammen (32), empfangene Daten (62) von einer Konvertierungseinheit (36) in ein für ein auf dem Automatisierungsgerät (14, 18-22) ablaufendes sicherheitsgerichtetes Anwenderprogramm (24) lesbares Zwischenformat (44) umgewandelt werden und
   wobei ein Datenstrukturtreiber (38) die Daten im Zwischenformat (44) in eine vom sicherheitsgerichteten Anwenderprogramm (24) vorgegebene Datenstruktur (46) konvertiert.

2. Verfahren nach Anspruch 1, wobei vom Automatisierungsgerät zu versendende Daten (62) durch den Datenstrukturtreiber (38) auf Basis der vom sicherheitsgerichteten Anwenderprogramm (24) für die Daten vorgegebenen Datenstruktur (46) in das Zwischenformat (44) konvertiert werden und wobei die Konvertierungseinheit (36) auf Basis des Zwischenformats (44) Daten zur Erzeugung eines sicherheitsgerichteten Telegramms (32) zur Übermittlung an den jeweiligen Empfänger generiert.

3. Verfahren nach Anspruch 1 oder 2, wobei das fehlersichere Anwenderprogramm (24) beim Erhalt eines sicherheitsgerichteten Telegramms (32) eine Datenstruktur der erhaltenen Daten mit einer vom empfangenden Anwenderprogramm (24) vorgegebenen, erwarteten Datenstruktur (46) vergleicht.

4. Verfahren nach Anspruch 3, wobei das fehlersichere Anwenderprogramm (24) zum Vergleichen der Datenstruktur der empfangenen Daten und der erwarteten Datenstruktur (46) jeweils diesbezügliche Kennwerte vergleicht, wobei hinsichtlich der Datenstruktur der empfangenen Daten diese Kennwerte von dem empfangenen sicherheitsgerichteten Telegramm (32) umfasst sind.

5. Verfahren nach Anspruch 4, wobei das Anwenderprogramm (24) eine Ausnahmebehandlung auslöst, wenn die Kennwerte anhand des sicherheitsgerichteten Telegramms (32) nicht den erwarteten Kennwerten entsprechen.

6. Verfahren nach Anspruch 5, wobei der Datenstrukturtreiber (38) durch einen Treibergenerator (48) automatisch generiert wird, wobei ein erwarteter Kennwert im empfängerseitigen fehlersicheren Anwenderprogramm (24) hinterlegt wird und wobei das empfängerseitige fehlersichere Anwenderprogramm (24) für ein empfangenes sicherheitsgerichtetes Telegramm (32) eine Ausnahmebehandlung auslöst, wenn die Kennwerte anhand des sicherheitsgerichteten Telegramms (32) nicht den erwarteten Kennwerten entsprechen.

7. Verfahren nach Anspruch 6, wobei eine Bildungsregel für die Ermittlung des Kennwerts im Treibergenerator (48) hinterlegt ist und wobei eine für die Ermittlung des im generierten Datenstrukturtreiber (38) hinterlegten Kennwerts verwendete Bildungsregel auch im Datenstrukturtreiber (38) abgelegt wird.

8. Computerprogramm mit Programmcode-Mitteln, um alle Schritte von jedem beliebigen der Ansprüche 1 bis 7 durchzuführen, wenn das Programm auf einem Automatisierungsgerät (14, 18-22) ausgeführt wird.

9. Computerprogrammprodukt, insbesondere digitales Speichermedium, mit elektronisch auslesbaren Steuersignalen, die so mit einem Automatisierungsgerät (14, 18-22) zusammenwirken können, dass ein Verfahren nach einem der Ansprüche 1 bis 7 ausgeführt wird.

10. Automatisierungsgerät mit einem Speicher und einer Verarbeitungseinheit, wobei in den Speicher ein durch die Verarbeitungseinheit ausführbares Computerprogramm nach Anspruch 8 geladen ist.

FIG 1

FIG 2

FIG 3

FIG 4

60

62 int

0x3A8 ～66

62 int

0x001 ～64

62 bool

0x001 ～64

62 real

0x002 ～64

62 real

0x010 ～64

0x010 ～64

0x3CC ～68

# FIG 5

FIG 6

Europäisches
Patentamt

European
Patent Office

Office européen
des brevets

**EUROPÄISCHER RECHERCHENBERICHT**

**Nummer der Anmeldung**

EP 11 16 8423

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PROFIBUS Nutzerorganisation e.V. PNO: "PROFIsafe Systembeschreibung Technologie und Anwendung", Internet, 1. November 2010 (2010-11-01), XP000002657152, Gefunden im Internet: URL:http://www.profibus.com/nc/downloads/downloads/profisafe-technology-and-application-system-description/download/9595/ [gefunden am 2011-08-18] * Seiten 1,4-8 * | 1-10 | INV. G05B9/00 G05B19/05 H04L12/40 |
| A | Siemens: "SIMATIC Industrie Software Safety Matrix Projektierungshandbuch", Internet, 1. Februar 2010 (2010-02-01), XP000002657153, Gefunden im Internet: URL:http://cache.automation.siemens.com/dnl_iis/zI/zIxNzExAAAA_19056619_HB/step7_s7_safety_matrix_configuration_manual_de%2DDE_de%2DDE.pdf [gefunden am 2011-08-18] * Seiten 51-62 * * Seiten 111-119 * | 1-10 | |

**RECHERCHIERTE SACHGEBIETE (IPC)**

G05B
H04L

Der vorliegende Recherchenbericht wurde für alle Patentansprüche erstellt

| Recherchenort | Abschlußdatum der Recherche | Prüfer |
|---|---|---|
| Den Haag | 19. August 2011 | Dörre, Thorsten |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes
  Dokument

EPO FORM 1503 03.82 (P04C03)